(19) Europäisches Patentamt
European Patent Office
Office européen des brevets

(11) **EP 1 444 802 B1**

(12) **EUROPÄISCHE PATENTSCHRIFT**

(45) Veröffentlichungstag und Bekanntmachung des Hinweises auf die Patenterteilung:
**28.02.2007 Patentblatt 2007/09**

(21) Anmeldenummer: **01982032.3**

(22) Anmeldetag: **15.11.2001**

(51) Int Cl.:
*H04L 1/00* *(2006.01)*

(86) Internationale Anmeldenummer:
**PCT/CH2001/000673**

(87) Internationale Veröffentlichungsnummer:
**WO 2003/043257 (22.05.2003 Gazette 2003/21)**

(54) **VERFAHREN UND SYSTEM ZUM BESTIMMEN VON DATENTRANSFERMARGINS FÜR NETZWERKVERBINDUNGEN**

METHOD AND SYSTEM FOR DETERMINING DATA TRANSFER MARGINS FOR NETWORK CONNECTIONS

PROCEDE ET SYSTEME DE DETERMINATION DE MARGES DE TRANSFERT DE DONNEES POUR DES CONNEXIONS DE RESEAU

(84) Benannte Vertragsstaaten:
**AT BE CH CY DE DK ES FI FR GB GR IE IT LI LU MC NL PT SE TR**

(43) Veröffentlichungstag der Anmeldung:
**11.08.2004 Patentblatt 2004/33**

(73) Patentinhaber: **Swisscom Fixnet AG**
**3050 Bern (CH)**

(72) Erfinder: **PYTHOUD, Frédéric**
**CH-1700 Fribourg (CH)**

(74) Vertreter: **BOVARD AG**
**Optingenstrasse 16**
**3000 Bern 25 (CH)**

(56) Entgegenhaltungen:
**EP-A- 0 905 948**

• **EUROPEAN TELECOMMUNICATIONS STANDARDS INSTITUTE: "Transmission and Multiplexing (TM); access networks; Spectral management on metallic access networks; Part 1: Definitions and signal library" ETSI TR 101 830-1, - August 2001 (2001-08) Seiten 1-85, XP002212697 France**

**Beschreibung**

Die vorliegende Erfindung betrifft ein Verfahren und System zum Bestimmen von Datentransfermargins für Netzwerkverbindungen, in welchem Verfahren und System die physikalische Länge einer Netzwerkverbindung zwischen einem Sender und einem Empfänger bekannt ist. Insbesondere betrifft das Verfahren Netzwerke basierend auf Kupferdrahtverbindungen.

Traditionelle Telefonnetzdienste, auch als POTS (Plain Old Telephone Service) bezeichnet, verbinden üblicherweise Haushaltungen und kleinere Betriebe mit einer Verteilerstation des Telefonnetzbetreibers über Kupferdrähte, die umeinander gewunden sind und Twisted Pair genannt werden. Diese waren ursprünglich dazu gedacht, analoge Signale, insbesondere Ton- und Stimmübertragungen zu gewährleisten. Diese Anforderungen haben sich aber spätestens mit dem Aufkommen des Internets und den damit zusammenhängenden Datenströmen geändert und ändern sich heute noch einmal rasant, durch das Bedürfnis, mit Echtzeit- und Multimediaapplikationen zu Hause und/oder im Büro arbeiten zu können.

Datennetzwerke, wie z.B. Intranet und Internet, beruhen stark auf sogenannten Shared Medien, d.h. auf paketorientierten LAN (Local Area Network) oder WAN (Wide Area Network) Technologien sowohl für Breitband-Backbone zwischen Switches und Gates als auch lokale Netzwerkverbindungen mit kleineren Bandbreiten. Die Benutzung von Paketmanagersystemen, wie z.B. Bridges oder Routers, sind weit verbreitet, um die lokalen LAN-Netzwerke mit dem Internet zu verbinden. Ein Internet Router muss dabei fähig sein, Pakete, basierend auf verschiedensten Protokollen, wie z.B. IP (Internet Protocol), IPX (Internet Packet eXchange), DECNET, AppleTALK, OSI (Open System Interconnection), SNA (IBM's Systems Network Architecture) etc., entsprechend übertragen zu können. Die Komplexität solcher Netzwerke, um die Pakete weltweit verteilen zu können, ist eine Herausforderung sowohl für den Anbieter von Diensten (Provider) als auch für den Hersteller der benötigten Hardware.

Die gebräuchlichen LAN Systeme arbeiten verhältnismässig gut bei Datentransferraten von etwa 100 Mbps. Bei Transferraten oberhalb von 100 Mbps reichen bei den meisten heutigen Netzwerken die Ressourcen des Netzwerkmanagers, wie Packet-Switches, nicht aus, um die Zuweisung der Bandbreiten (Allokation) und der Userzugriffe zu verwalten. Natürlich wurde die Nützlichkeit von paketbasierenden Netzwerken zur Übermittlung digitaler Information, im speziellen bei kurzfristigen Übertragungsspitzen, seit langem erkannt. Solche Netzwerke haben gewöhnlich Point-To-Point Struktur, wobei ein Paket von eine einzelnen Absender zu einem einzelnen Empfänger geleitet wird, indem jedes Paket mindestens die Zieladresse umfasst. Ein typisches Beispiel dazu ist der bekannte IP-Header eines IP-Datenpaketes. Das Netzwerk reagiert auf das Datenpaket, indem es das Paket zur Adresse des zugeordneten Headers leitet. Paketbasierende Netzwerke könne auch dazu benutzt werden, Datentypen, die einen kontinuierlicheren Datenfluss benötigen, zu übertragen, wie z.B. Ton- und Audioübertragungen von hoher Qualität oder Videoübertragungen. Die kommerzielle Nutzung der Netzwerke macht es insbesondere wünschenswert, dass paketbasierende Übertragung auch zu mehreren Endpunkten gleichzeitig möglich ist. Ein Beispiel dazu ist das sog. Packet Broadcasting zur Übertragung von Video- oder Audiodaten. Damit lässt sich sog. Pay-TV, das heisst die kostenpflichtige Broadcastübertragung von Vidoedaten über das Netzwerk realisieren.

Bei einer nächsten Generation von Applikationen, wie Echtzeit-(Reaitime) und Multimediaapplikationen mit ihrem viel grösseren Bedarf an Bandbreite, die zudem zu jedem Zeitpunkt garantiert sein muss, stossen die paketorientierten Netzwerke jedoch an ihre Grenzen. So sollte eine nächste Generation von Netzwerken die Möglichkeit besitzen, die Netzwerke dynamisch zu rekonfigurieren, um dem Benutzer stets einen vordefinierte Bandbreite für angeforderte oder vereinbarte QoS Parameter (Quality of Service) garantieren zu können. Diese QoS umfassen z.B. Zugriffsgarantie, Zugriffsperformance, Fehlertoleranz, Datensicherheit etc. zwischen allen möglichen Endsystemen. Neue Technologien, wie z.B. ATM (Asynchronous Transfer Mode), sollen dabei helfen, in der Langzeitentwicklung der Netzwerke die benötigten Voraussetzungen für das private Intranet wie auch das öffentliche Internet zu schaffen. Diese Technologien versprechen eine ökonomischere und skalierbarere Lösung für solche mittels QoS-Parameter garantierten High-Performance-Verbindungen.

Eine Änderung für zukünftige Systeme wird insbesondere auch den Datenfluss betreffen. Der Datenfluss basiert heute üblicherweise auf einem Server-Client-Model, d.h. Daten werden von vielen Clients auf oder von einem oder mehreren Netzwerk-Servers übertragen. Die Clients kreieren üblicherweise keine direkte Datenverbindung, sondern sie kommunizieren via Netzwerk-Servern miteinander. Diese Art von Verbindung wird auch weiterhin ihren Stellenwert haben. Trotzdem ist zu erwarten, dass die Datenmenge, die Peer-To-Peer übertragen wird, in Zukunft stark steigen wird. Da das letztendliche Ziel der Netzwerke, um den Anforderungen zu genügen, eine wirklich dezentrale Struktur sein wird, in welchem alle Systeme sowohl als Server wie auch als Client agieren können, wird der Datenfluss durch Peer-To-Peer Verbindungen zunehmen. Damit wird das Netzwerk mehr direkte Verbindungen zu den verschiedenen Peers erzeugen müssen, wobei z.B. Desktop-Computer über das Backbone-Internet direkt verbunden werden.

Damit ist klar, dass es mit den zukünftigen Applikationen immer wichtiger werden wird, dass dem Benutzer vorausbestimmbare QoS-Parameter und grosse Bandbreiten garantiert werden können.

Zur Datenübertragung zum Endbenutzer werden insbesondere das traditionelle öffentliche Telefonnetz (PSTN:

Public Switched Telephone Network) und/oder (PLMN: Public Land Mobile Network) benutzt, welche ursprünglich eigentlich zur reinen Tonübertragung ausgelegt waren, und nicht zur Übertragung von solchen Mengen digitaler Daten. Dabei spielt bei der Bestimmung der QoS-Parameter, die ein Provider oder Anbieter von Telefondiensten dem Benutzer garantieren kann, die sogenannte "letzte Meile" eine entscheidende Rolle. Als letzte Meile wird die Strecke zwischen der letzten Verteilerstation des öffentlichen Telefonnetzes und dem Endbenutzer bezeichnet. Die letzte Meile besteht in den wenigsten Fällen aus leistungsfähigen Glasfaserkabeln, sondern basiert meistens auf der gewöhnlichen Kupferdrahtverkabelung, wie z.B. Kabel mit 0.4 oder 0.6 mm Ader-Durchmesser. Die Kabel sind zudem nicht überall in geschütztem Bodenleitungsbau unterirdisch verlegt, sondern bestehen auch aus Überlandleitungen an Telefonmasten u. ä. Dadurch entstehen zusätzliche Störungen.

Ein weiteres Problem bei der Bestimmung der maximalen QoS-Parameter ist die sog. Crosstalk-Problematik. Dieses Problem entsteht bei der Modulation des Signals auf die Leitung z.B. von Enduser zur Verteilerstation des Telefonnetzbetreibers und umgekehrt. Zur Modulation von digitalen Signalen sind im Stand der Technik z.B. die xDSL-Technologien (Digital Subscriber Line) bekannt, wie ADSL (Asymmetric Digital Subscriber Line), SDSL (Symmetric Digital Subscriber Line), HDSL (High-data-rate DSL) oder VDSL (Very high speed Digital Subscriber Line). Das erwähnte Crosstalk ist das physikalische Phänomen, das bei der Modulation von Daten über ein Kupferkabel auftritt. Benachbarte Kupferkabeldrähte innerhalb eines Kupferkabels erhalten über elektromagnetische Wechselwirkung paarweise Teilsignale, die vom Modem erzeugt werden. Dies führt dazu, dass xDSL-Modems, auf benachbarten Drähten übertragen, sich gegenseitig stören. Man unterscheidet zwischen Near-End Crosstalk (Next), welches das ungewollte Signalkoppeln von Signalen des Senders (Transmitter) am einen Ende zu den Signalen beim Empfänger (Receiver) am gleichen Ende beschreibt, und Far-End Crosstalk (FEXT), welches das ungewollte Signalkoppeln von Signalen bei der Übertragung zum Empfänger am anderen Ende beschreibt, wobei die Signale bei der Übertragung an Signale von benachbarten Kupferpaardrähten gekoppelt werden und beim Empfänger als Rauschen (Noise) erscheinen.

Obwohl heute viele Studien zu xDSL Crosstalk zugänglich sind, wie z.B. "Spectral management on metallic access networks; Part 1: Definitions and signal library", ETSI (European Telecommunications Standards Institute), TR 101 830, September 2000, gibt es wegen der Komplexität des Crosstalk-Phänomens und der restlichen Rauschparameter zur Zeit wenig brauchbare, technisch einfach zu handhabende und kostengünstige Hilfsmittel zur Bestimmung der QoS-Parameter für einen bestimmten Endbenutzer im Netz. Im Stand der Technik wurde von verschiedenen Firmen, wie z.B. Acterna (WG SLK-11/12/22, Eningen u.A., Deutschland), Trend Communications (LT2000 Line Tester, www.trendcomms.com, Buckinghamshire, U.K.) etc. Remotemesssysteme vorgeschlagen. Dabei wird die maximale Transferrate über die letzte Meile durch direkte Messungen mittels der Remotemesssystemen bestimmt: Ein digitaler Signalprozessor wird an jeder lokalen Verteilerstation eine Telefonnetzbetreibers (z.B. in der Schweiz mehrere tausend) installiert. Mittels des digitaler Signalprozessors wird eine sog. "single ended mesurement", da beim Benutzer auf der anderen Seite der letzten Meile keine Installationen von Geräten notwendig sind, durchgeführt. Die Messungen sind aber prinzipell auch möglich mittels "double ended mesurement". Dabei sind aber Installationen von Messgeräten an beiden Enden der Leitung notwendig.

In der Patentanmeldung EP 0 905 948 wird ein Rate adaption für ADSL beschrieben. Sobald zwischen einem Terminal und einer Zentrale ein Kanal erstellt ist, werden durch das Terminal kanalspezifische Informationen an die Zentrale übermittelt. Anschliessend kann durch die Zentrale eine optimierte Datenrate für das Terminal selektiert werden. Die Zentrale wertet die kanalspezifischen Informationen mittels Berechnungen und Lookup-Tabellen aus und bestimmt Performance Margins für verschiedene Datenraten.

Die Nachteile des Standes der Technik sind jedoch u.a. hohe Kosten durch die benötigte Installation von Remotemesssystemen bei jeder lokalen Verteilerstation und eine nicht genau bekannte Unsicherheit bzw. ein nicht bekannten Fehler bei der Messung, da die Messungen nur einseitig (single ended) durchgeführt werden und zur Bestimmung des Fehlers beidseitige Messungen notwendig wären. Eine zweiseitige Messung wäre aber weder vom personellen und zeitlichen Aufwand, noch vom Kostenaufwand durchführbar. Ebenso fehlen im Stand der Technik Algorithmen mit ihrer hardware- oder softwaremässigen Realisierung zum Berechnen bzw. Vorhersagen der maximal möglichen Bitraten einer Netzwerkverbindung. Eine Installation der Remotemesssysteme an den weniger zahlreichen zentralen Verteilerstationen anstelle der lokalen Endverteilerstationen zeigt, dass die Messungen mit so grossen Unsicherheiten behaftet sind, dass sie sich zur Bestimmung der maximal möglichen Datendurchsatzrate für eine bestimmte Leitung zu einem Endbenutzer nicht eignen.

Es ist eine Aufgabe dieser Erfindung, ein neues Verfahren, System und Computerprogrammprodukt zum Bestimmen von Datentransfermargins für Netzwerkverbindungen vorzuschlagen, welches die oben beschriebenen Nachteile nicht aufweist. Insbesondere sollen die Margins und/oder die maximalen Bitraten für einen bestimmten Benutzer bzw. Netzwerkanschluss schnell und flexibel bestimmt werden können, ohne dass ein unverhältnismässiger, technischer, personeller und finanzieller Aufwand betrieben werden muss.

Gemäss der vorliegenden Erfindung wird dieses Ziel insbesondere durch die Elemente der unabhängigen Ansprüche erreicht. Weitere vorteilhafte Ausführungsformen gehen ausserdem aus den abhängigen Ansprüchen und der Beschreibung hervor.

Insbesondere werden diese Ziele durch die Erfindung dadurch erreicht, dass zum Bestimmen von Datentransfermargins für Netzwerkverbindungen, wobei die physikalische Länge einer zu bestimmenden Netzwerkverbindung zwischen einem Sender und einem Empfänger bekannt ist, ein Leistungsspektrum in Abhängigkeit der Übertragungsfrequenz für mögliche Modemtypen mittels Leistungsmessvorrichtung gemessen wird und auf einen Datenträger eine Verrechnungseinheit übertragen wird, dass mit der Verrechnungseinheit die Dämpfung für verschiedene physikalische Längen und Kabeladerdicken einer Netzwerkverbindung bestimmt wird und die effektiven Signalstärken beim Empfänger basierend auf der Dämpfung sowie dem Leistungsspektrum den jeweiligen physikalischen Längen und Kabeladerdicken (d.h. den Aderdurchmessern im Kabel) zugeordnet in einer ersten Liste auf einem Datenträger der Verrechungseinheit abgespeichert wird, dass in einer zweiten Liste der Rauschlevel den jeweiligen physikalischen Längen und Kabeladerdicken der Netzwerkverbindung zugeordnet auf einem Datenträger der Verrechnungseinheit abgespeichert wird, wobei der Rauschlevel mittels der Verrechnungseinheit in Abhängigkeit mindestens von Crosstalkparameter und Anzahl Störquellen basierend auf dem Leistungsspektrum bestimmt wird, dass die Verrechnungseinheit mittels eines Gausstransformationsmoduls basierend auf den effektiven Signalstärken der ersten und den entsprechenden Rauschlevels der zweiten Liste für verschiedene Datenübertragungsmodulationen und/oder Modulationscodierungen die Datentransfermargins für eine vordefinierte Bitrate bestimmt und den jeweiligen physikalischen Längen und Kabeladerdicken der Netzwerkverbindung zugeordnet auf einem Datenträger der Verrechnungseinheit abspeichert, dass die Verrechnungseinheit die effektiven Datentransfermargins mittels mindestens eines oder mehreren Korrekturfaktoren basierend auf den abgespeicherten Datentransfermargins bestimmt und den jeweiligen physikalischen Längen und Kabeladerdicken der Netzwerkverbindung zugeordnet auf einem Datenträger der Verrechnungseinheit abspeichert, wobei der Korrekturfaktor eine mittlere Abweichung der abgespeicherten Datentransfermargins zu den effektiven Datentransfermargins und/oder ein Equalizerfaktor zur Korrektur der Equalizerabstimmung umfasst, und dass die Verrechnungseinheit basierend auf den abgespeicherten effektiven Datentransfermargins anhand der bekannten physikalischen Länge der zu bestimmenden Netzwerkverbindung zwischen dem Sender und dem Empfänger den Datentransfermargin für die jeweilige Netzwerkverbindung bestimmt. Ein Vorteil der Erfindung ist u.a., dass das Verfahren und System erstmals eine einfache und schnelle Bestimmung der Datentransfermargins erlaubt, ohne dabei einen immensen technischen, personellen und zeitmässigen Aufwand betreiben zu müssen. Insbesondere lassen sich die Unsicherheiten mittels der erwähnten Korrektur korrigieren, ohne dass, wie bei den Remotemesssystemen zur Messung der Datentransfermargins und/oder der Bitraten bei jeder lokalen Verteilerstation eine unterschiedliche, nicht genau bekannte Unsicherheit bzw. nicht bekannte Fehler bei der Messung korrigiert werden müssen, welcher Fehler durch die Einseitigkeit (single ended) schwer abzuschätzen ist, da zur Bestimmung des Fehler beidseitige Messungen notwendig wären. Wie oben beschrieben bleibt der Aufwand gegenüber dem Stand der Technik dabei klein. Dies gilt sowohl für das Durchführen der Messung als auch das Installieren der notwendigen Vorrichtungen.

In einer Ausführungsvariante wird das Leistungsspektrum in Abhängigkeit der Übertragungsfrequenz für ADSL- und/oder SDSL- und/oder HDSL- und/oder und/oder VDSL-Modemtypen gemessen. Die möglichen SDSL-Modemtypen können dabei mindestens einen G.991.2-Modemtypen und/oder die ADSL-Modemtypen mindestens einen G.992.2-Modemtypen umfassen. Mittels des Gausstransformationsmoduls können die Datentransfermargins für mindestens die Datenübertragungsmodulationen 2B1Q (2 Binary, 1 Quarterary) und/oder CAP (Carrierless Amplitude/Phase Modulation) und/oder DMT (Discrete Multitone) und/oder PAM (Pulse Amplitute Modulation) bestimmt werden. Auch kann mittels des Gausstransformationsmoduls die Datentransfermargins für mindestens die Trellis-Modulationscodierung bestimmt werden. Diese Ausführungsvariante hat u.a. den Vorteil, dass es sich bei den xDSL-Modemtypen, den erwähnten Datenübertragungsmodulationen und der Trellis-Modulationscodierung gängige Standardtechnologien benutzt werden, die auf dem Markt einfach erhältlich sind und deren Benutzung sowohl in Europa als auch in der USA etc. weit verbreitet sind.

In einer anderen Ausführungsvariante wiedergibt der Korrekturfaktor eine nichtlineare Abhängigkeit bezüglich der physikalischen Längen und/oder Kabeladerdicken, d.h. der Korrekturfaktor kann durch eine nichtlineare Funktion, z.B. einer Polynomfunktion eines Grades höher als 1 dargestellt werden. Diese Ausführungsvariante hat u.a. den Vorteil, dass damit viel komplexere Abhängigkeiten als mit linearen Korrekturfaktoren berücksichtigt und korrigiert werden können.

Eine wieder andere Ausführungsvariante umfasst ein Computerprogrammprodukt, das direkt in den internen Speicher eines digitalen Computer geladen werden kann und Softwarecodeabschnitte umfasst, mit denen die Schritte gemäss den vorhergehenden Ausführungsvarianten ausgeführt werden, wenn das Produkt auf einem Computer läuft. Diese Ausführungsvariante hat den Vorteil, dass sie eine technische Realisierung der Erfindung erlaubt, die einfach zu handhaben und ohne grosse Installationen zu benutzen ist.

Insbesondere wird zum Bestimmen von Bitraten für Netzwerkverbindungen, wobei die physikalische Länge einer Netzwerkverbindung zwischen einem Sender und einem Empfänger bekannt ist, ein Leistungsspektrum in Abhängigkeit der Übertragungsfrequenz für mögliche Modemtypen mittels Leistungsmessvorrichtung gemessen und auf einen Datenträger einer Verrechnungseinheit übertragen, mit der Verrechnungseinheit wird die Dämpfung für verschiedene physikalische Längen und Kabeladerdicken einer Netzwerkverbindung bestimmt und die effektiven Signalstärken beim Empfänger basierend auf der Dämpfung sowie dem Leistungsspektrum den jeweiligen physikalischen Längen und Kabeladerdicken zugeordnet in einer ersten Liste auf einem Datenträger der Verrechnungseinheit abgespeichert wird, in einer zweiten Liste wird der Rauschlevel den jeweiligen physikalischen Längen und Kabeladerdicken der Netzwerkverbindung zugeordnet auf einem Datenträger der Verrechnungseinheit abgespeichert, wobei der Rauschlevel mittels der Verrechnungseinheit in Abhängigkeit mindestens von Crosstalkparameter und Anzahl Störquellen basierend auf dem Leistungsspektrum bestimmt, die Verrechnungseinheit bestimmt mittels eines Gausstransformationsmoduls basierend auf den effektiven Signalstärken der ersten und den entsprechenden Rauschlevels der zweiten Liste für verschiedene Datenübertragungsmodulationen und/oder Modulationscodierungen, die Bitraten für einen vordefinierten Datentransfermargin und speichert die Bitrate den jeweiligen physikalischen Längen und Kabeladerdicken der Netzwerkverbindung zugeordnet auf einem Datenträger der Verrechnungseinheit ab, die Verrechnungseinheit bestimmt die effektiven Bitraten mittels eines oder mehrerer Korrekturfaktoren basierend auf den abgespeicherten Bitraten und speichert die effektiven Bitraten den jeweiligen physikalischen und Kabeladerdicken der Netzwerkverbindung zugeordnet auf einem Datenträger der Verrechnungseinheit ab, wobei der Korrekturfaktor die mittlere Abweichung der abgespeicherten Bitraten zu den effektiven Bitraten und/oder ein Equalizerfaktor zur Korrektur der Equalizerabstimmung umfasst, und die Verrechnungseinheit bestimmt basierend auf den abgespeicherten effektive Bitraten anhand der bekannten physikalischen Länge der zu bestimmenden Netzwerkverbindung zwischen dem Sender und dem Empfänger die Bitrate für die jeweilige Netzwerkverbindung. Diese Ausführungsvariante hat u.a. den Vorteil, dass das Verfahren und System erstmals eine einfache und schnelle Bestimmung der Bitraten erlaubt, ohne dabei einen immensen technischen, personellen und zeitmässigen Aufwand betreiben zu müssen. Insbesondere lassen sich die Unsicherheiten mittels der erwähnten Korrektur korrigieren, ohne dass wie bei den Remotemesssystemen zur Messung der Datentransfermargins und/oder der Bitraten bei jeder lokalen Verteilerstation eine unterschiedliche, nicht genau bekannte Unsicherheit bzw. nicht bekannte Fehler bei der Messung korrigiert werden müssen, welche Fehler durch die Einseitigkeit (single ended) schwer abzuschätzen sind, da zur Bestimmung des Fehler beidseitige Messungen notwendig wären.

In einer Ausführungsvariante wird das Leistungsspektrum in Abhängigkeit der Übertragungsfrequenz für ADSL- und/oder SDSL- und/oder HDSL- und/oder und/oder VDSL-Modemtypen gemessen. Die möglichen SDSL-Modemtypen können dabei mindestens einen G.991.2-Modemtypen und/oder die ADSL-Modemtypen mindestens einen G.992.2-Modemtypen umfassen. Mittels des Gausstransformationsmoduls können die Datentransfermargins für mindestens die Datenübertragungsmodulationen 2B1 Q und/oder CAP und/oder DMT und/oder PAM bestimmt werden. Auch können mittels des Gausstransformationsmoduls die Datentransfermargins für mindestens die Trellis-Modulationscodierung bestimmt werden. Diese Ausführungsvariante hat u.a. den Vorteil, dass bei den xDSL-Modemtypen, den erwähnten Datenübertragungsmodulationen und der Trellis-Modulationscodierung gängige Standardtechnologien benutzt werden, die auf dem Markt einfach erhältlich sind und deren Benutzung sowohl in Europa als auch in der USA etc. weit verbreitet sind.

In einer weiteren Ausführungsvariante umfasst der Korrekturfaktor eine nichtlineare Abhängigkeit bezüglich der physikalischen Längen und/oder Kabeladerdicken, d.h. der Korrekturfaktor kann durch eine nichtlineare Funktion, z.B. eine Polynomfunktion eines Grades höher als 1 dargestellt werden. Diese Ausführungsvariante hat u.a. den Vorteil, dass damit viel komplexere Abhängigkeiten als mit linearen Korrekturfaktoren berücksichtigt und korrigiert werden können.

In einer weiteren Ausführungsvariante werden mittels des Gausstransformationsmoduls die Bitraten für Datentransfermargins zwischen 3 und 9 dB bestimmt. Diese Ausführungsvariante hat u.a. den Vorteil, dass der Bereich zwischen 3 und 9 dB einen Empfang mit den meisten Anforderungen genügenden QoS-Parameter erlaubt. Insbesondere erlaubt der Bereich der Datentransfermargins zwischen 3 und 9 dB eine Optimierung der Bitrate bezüglich den anderen QoS-Parametern.

In einer weiteren Ausführungsvariante werden mittels des Gausstransformationsmoduls die Bitraten für einen Datentransfermargin 6 dB bestimmt. Diese Ausführungsvariante hat u.a. die gleichen Vorteile, wie die vorhergehende Ausführungsvariante. Insbesondere erlaubt wie oben, ein Datentransmargin von 6 dB eine Optimierung der Bitrate bezüglich den anderen QoS-Parametern.

Eine wieder andere Ausführungsvariante umfasst ein Computerprogrammprodukt, das direkt in den internen Speicher eines digitalen Computers geladen werden kann und Softwarecodeabschnitte umfasst, mit denen die Schritte gemäss den vorhergehenden Ausführungsvarianten ausgeführt werden, wenn das Produkt auf einem Computer läuft. Diese Ausführungsvariante hat den Vorteil, dass sie eine technische Realisierung der Erfindung erlaubt, die einfach zu handhaben und ohne grosse Installationen zu benutzen ist.

An dieser Stelle soll festgehalten werden, dass sich die vorliegende Erfindung neben dem erfindungsgemässen Verfahren auch auf ein System und ein Computerprogrammprodukt zur Ausführung dieses Verfahrens bezieht.

Nachfolgend werden Ausführungsvarianten der vorliegenden Erfindung anhand von Beispielen beschrieben. Die Beispiele der Ausführungen werden durch folgende beigelegte Figuren illustriert:

Figur 1 zeigt ein Blockdiagramm, welches schematisch die Architektur einer Ausführungsvariante eines erfindungsgemässen Systems zur Bestimmung von Datentransfermargins bzw. Bitraten für eine Netzwerkverbindung 12 mit einer bestimmten physikalische Länge 13 zwischen einem Sender 10 und einem Empfänger 11 zeigt.

Figur 2 zeigt schematisch eine Crosstalk-Interaktion mit Near-End Crosstalk (Next) 51, welches das ungewollte Koppeln vom Signalen 50 des Senders 10 (Transmitter) am einen Ende zu den Signalen 50 beim Empfänger 11 (Receiver) am gleichen Ende beschreibt, und Far-End Crosstalk (FEXT) 52, welches das ungewollte Koppeln von Signalen 50 bei der Übertragung zum Empfänger 11 am anderen Ende beschreibt, wobei die Signale 50 bei der Übertragung an Signale 50 von benachbarten Kupferpaardrähten koppelt und beim Empfänger 11 als Rauschen (Noise) erscheint.

Figur 3 zeigt schematisch die Übertragungsdistanz der Netzwerkverbindung in Abhängigkeit der Übertragungsrate (Bitrate) für ADSL-Modems, wie sie mit einem erfindungsgemässen System erhalten werden kann. Die Referenznummern 60 und 61 bezeichnen dabei unterschiedliche Rauschumgebungen.

Figur 4 zeigt schematisch die sog. letzte Meile des öffentlichen Telefonnetzes (PSTN: Public Switched Telephone Network), wie sie typischerweise zwischen dem Endbenutzer zu Hause und einem Netzwerk, welches über das öffentliche Telefonnetz erreicht werden soll, besteht.

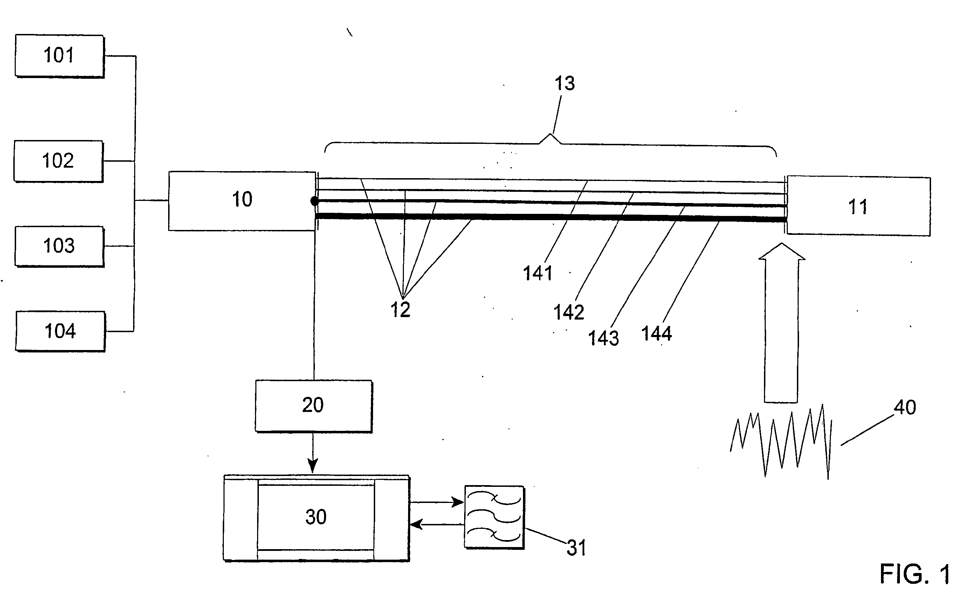

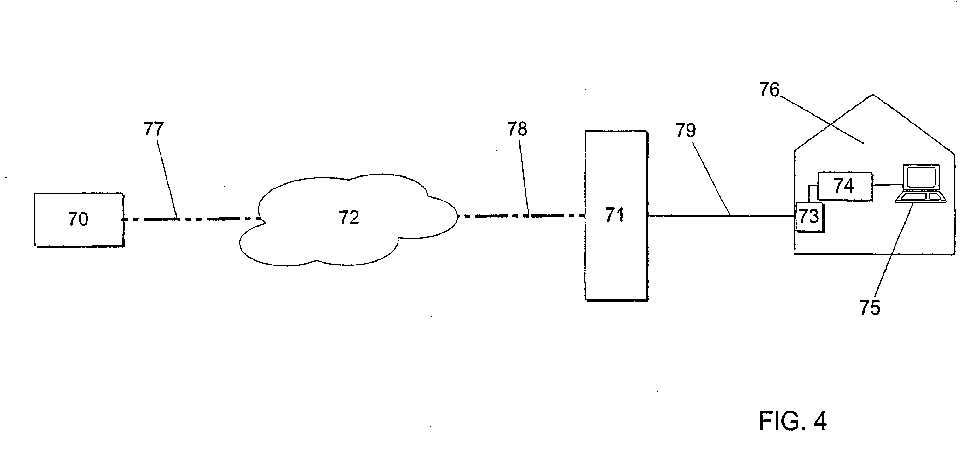

Figur 1 illustriert eine Architektur, die zur Realisierung der Erfindung verwendet werden kann. In diesem Ausführungsbeispiel für das Verfahren und das System zum Bestimmen von Datentransfermargins und/oder Bitraten für Netzwerkverbindungen ist die physikalische Länge 13 einer zu bestimmenden Netzwerkverbindung 12 zwischen einem Sender 10 und einem Empfänger 11 bekannt. Mit der physikalischen Länge ist die effektive Kabellänge, also nicht etwa z.B. die Luftdistanz, zwischen dem Sender 10 und dem Empfänger 11 gemeint. Die Netzwerkverbindung 12 soll aus einem analogen Medium, wie z.B. einer Kupferdrahtverkabelung bestehen. In diesem Ausführungsbeispiel wurden beispielsweise Kupferkabel mit 0.4 oder 0.6 mm Ader-Durchmesser verwendet, wie sie typischerweise auf der letzten Meile des öffentlichen Telefonnetzes (PSTN: Public Switched Telephone Network) zum Einsatz kommen. Die letzte Meile wird in Figur 4 schematisch dargestellt. Die Referenznummer 70 bezeichnet dabei einen Router zu einem Netzwerk, der über z.B. ein 10 BT Ethernet 77 und das öffentliche Telefonnetz (PSTN) 72 mit einem mit einem Modem Terminal Server 71 verbunden ist. Der Modem Terminal Server 71 ein DSL Access Multiplexer (DSLAM) sein. Wie erwähnt ist die Referenznummer 72 das öffentliche Telefonnetz (PSTN), an welches der Modem Terminal Server 71 beispielsweise über ein Glasfaserkabel 78 angeschlossen ist. Weiter ist das öffentliche Telefonnetz 79 rsp. der Modem Terminal Server 71 über typischerweise ein Kupferdrahtkabel 79 und über die Telefonbox 73 mit einem Modem 74 eines Personal Computers (PC) 75 verbunden. Die Referenznummer 79 ist dabei die erwähnte sogenannte "letzte Meile" von der Verteilerstation des Telefonneztbetreibers zum Enduser. Der Enduser 76 kann damit mit seinem PC direkt auf den Router 70 mittels der beschriebenen Verbindung zugreifen. Die gebräuchlichen Telefonkupferleitungen können z.B. aus 2-2400 Paar Kupferdrähten bestehen. Es sind aber auch andere analoge Medien, insbesondere Kupferkabel mit z.B. anderen Aderdurchmessern, vorstellbar. Es muss ausdrücklich darauf hingewiesen werden, dass die Netzwerkverbindungen 12 nicht nur jeweils unterschiedliche Durchmesser bzw. Dicken 114, 142, 143, 144 aufweisen können, sondern dass eine einzelne Netzwerkverbindung aus einer Kombination von Kabeln mit unterschiedlichem Ader-Durchmesser oder Dicken bestehen kann, d.h. dass die Netzwerkverbindung mehrere Teilstücke von Kabeln mit unterschiedlicher Aderndicke umfasst.

Ein Leistungsspektrum $PSD_{Modem}(f)$ wird in Abhängigkeit der Übertragungsfrequenz $f$ für mögliche Modemtypen 101, 102, 103, 104 mittels Leistungsmessvorrichtung 20 gemessen und auf einen Datenträger einer Verrechnungseinheit 30 übertragen. Das Leistungsspektrum wird auch als die Power Spectral Density (PSD) bezeichnet und gibt für eine bestimmte Bandbreite eines kontinuierlichen Frequenzspektrums, die totale Energie der bestimmten Frequenzbandbreite dividiert durch die bestimmte Bandbreite wieder. Die Division durch die Bandbreite entspricht einer Normierung. Die PSD ist somit eine Funktion in Abhängigkeit der Frequenz f und wird normalerweise in Watt pro Hertz anzugeben. Zur Leistungsmessung mittels Leistungsmessvorrichtung 20 beim Empfänger 11 kann z.B. ein einfacher A/D-Konvertor verwendet werden, wobei die Spannung über einen Widerstand angelegt wird. Zur Modulation von digitalen Signalen auf die Leitung 12 z.B. von Enduser zur Verteilerstation des Telefonnetzbetreibers und umgekehrt, können verschiedenste Modemtypen verwendet werden. Im Stand der Technik sind z.B. die xDSL-Technologien (Digital Subscriber Line) bekannt, deren zwei Hauptvertreter ADSL (Asymmetric Digital Subscriber Line) und SDSL (Symmetric Digital Subscriber Line) sind. Weitere Vertreter der xDSL-Technologie sind HDSL (High-data-rate DSL) und VDSL (Very high speed Digital Subscriber Line). Die xDSL-Technologien sind hochentwickelte Modulationsschemata, um Daten auf Kupferleitungen oder andere analoge Medien zu modulieren. xDSL-Technologien werden manchmal auch als "Letzte-Meile-Technologie" bezeichnet, eben weil sie üblicherweise dazu dienen, die letzte Telefonnetzverteilerstation mit dem Endbenutzer im Büro oder zu Hause zu verbinden und nicht zwischen den einzelnen Telefonnetzverteilerstation verwendet werden. xDSL ist insofern ähnlich zu ISDN (Integrated Services Digital Network), als dass es über die existierenden Kupferleitungen operieren kann und beide eine relativ kurze Distanz zur nächsten Verteilerstation des Telefonnetzbetreibers benötigen. xDSL bietet jedoch viel höhere Übertragungsraten als ISDN. xDSL erreicht Datenübertragungsraten bis 32 Mbps (bps: bits per second) Downstreamrate (Übertragungsrate bei Empfangen von Daten, d.h. bei der Modulation) und von 32 kbps bis 6 Mbps Upstreamrate (Übertragungsrate beim Senden von Daten, d.h. bei der Demudulation), während ISDN pro Kanal Datenübertragungsraten von 64kbps unterstützt. ADSL ist eine in letzter Zeit sehr populär gewordene Technologie, zum Modulieren von Daten über Kupferleitungen. ADSL unterstützt Datenübertragungsraten von 0 bis 9 Mbps Downstreamrate und 0 bis 800 kbps Upstreamrate. ADSL heisst asymmetrisches DSL, da es unterschiedliche Downstream- und Upstreamraten unterstützt. SDSL oder symmetrisches DSL heisst im Gegensatz dazu symmetrisch, weil es die gleichen Downstream- und Upstreamraten unterstützt. SDSL erlaubt das Übertragen von Daten bis zu 2.3 Mbps. ADSL sendet digitale Impulse in einem hochfrequenten Bereich der Kupferkabel. Da diese hohen Frequenzen bei der normalen Tonübertragung im Hörbereich (z.B. Stimmen) nicht benutzt werden, kann ADSL z.B. gleichzeitig zur Übertragung von Telefongesprächen über das gleiche Kupferkabel arbeiten. ADSL ist in Nordamerika weit verbreitet, während SDSL vor allem in Europa entwickelt wurde. ADSL wie SDSL benötigen speziell dafür ausgerüstete Modems. HDSL ist ein Vertreter für symmetrische DSL (SDSL). Der Standard für symmetrisches HDSL (SDSL) ist zur Zeit G.SHDSL, bekannt als G.991.2, wie er als internationaler Standard vom CCITT (Comité Consulatif International Téléphonique et Télégraphique) der ITU (International Telecommunication Union) entwickelt wurde. G.991.2 unterstützt das Empfangen und Senden von symmetrischen Datastreams über ein einfaches Paar Kupferdrähte mit Transferraten zwischen 192 kbps und 2.31 Mbps. G.991.2 wurde so entwickelt, dass es Eigenschaften von ADSL und SDSL umfasst und Standardprotokolle wie das IP (Internet Protocol), insbesondere die aktuellen Versionen IPv4 und IPv6 oder IPng des IETF (Internet Engineering Task Force) sowie TCP/IP (Transport Control Protocol), ATM (Asynchronous Transfer Mode), T1, E1 und ISDN unterstützt. Als letzte der xDSL-Technologien ist hier VDSL (Very high speed Digital Subscriber Line) zu erwähnen. VDSL übermittelt Daten in Bereich von 13 - 55 Mbps über kurze Distanzen (gewöhnlich zwischen 300-1500m) via Twisted-Pair Kupferkabel. Bei VDSL gilt, je kürzer die Distanz, desto höher die Übertragungsrate. Als Schlussstück eines Netzwerkes verbindet VDSL das Büro oder das Haus eines Benutzers mit einer benachbarten optischen Netzwerkeinheit, genannte Optical Network Unit (ONU), welche typischerweise mit dem Hauptglasfasernetzwerk (Backbone) beispielsweise einer Firma verbunden ist. VDSL erlaubt dem Benutzer einen Zugriff auf das Netzwerk mit maximaler Bandbreite über die normalen Telefonleitungen. Der VDSL Standard ist noch nicht vollständig festgelegt. So gibt es VDSL-Technologien, die ein Line Coding Schema basierend auf DMT (Discrete Multitone) besitzen, wobei DMT ein Multi-Carrier System ist, welches eine grosse Ähnlichkeit zur ADSL-Technologie hat. Andere VDSL-Technologien haben ein Line-Coding Schema basieren auf Quadature Amplitude Modulation (QAM), das im Gegensatz zum DMT billiger ist und weniger Energie benötigt. Für dieses Ausführungsbeispiel können die Modemtypen ADSL- und/ oder SDSL- und/oder HDSL- und/oder und/oder VDSL-Modemtypen (101, 102, 103, 104) umfassen. Insbesondere können die möglichen SDSL-Modemtypen (101, 102, 103, 104) mindestens einen G.991.2-Modemtypen und/oder die ADSL-Modemtypen (101, 102, 103, 104) mindestens einen G.992.2-Modemtypen umfassen. Es ist aber klar, dass diese Aufzählung in keiner Weise einschränkend auf den Schutzbereich der Erfindung gelten soll, sondern im Gegenteil sind andere Modemtypen vorstellbar.

Mit der Verrechnungseinheit 30 wird die Dämpfung H für verschiedene physikalische Längen 13 und Aderdicken der Kabels 141, 142, 143, 144, wie z.B. 0.4 mm und 0.6 mm, einer Netzwerkverbindung 12 bestimmt und die effektiven Signalstärken S(f) beim Empfänger 11 basierend auf der Dämpfung H(f) sowie dem Leistungsspektrum PSD(f) den jeweiligen physikalischen Längen L 13 und Kabeladerdicken D 141, 142, 143, 144 zugeordnet in einer ersten Liste auf einem Datenträger der Verrechnungseinheit 30 abgespeichert. Die Dämpfung H(f,L,D) ist dabei wie die effektive Signalstärke S(f) eine Funktion in Abhängigkeit der Frequenz f. Das vom Sender 10 gesendete Signal ist somit $PSD_{Modem}(f)$, während beim Empfänger noch eine effektive Signalstärke S(f) = $PSD_{Modem}(f)H^2(f,L,D)$ erhalten wird. In einer zweite Liste wird der Rauschlevel N(f) 40 den jeweiligen physikalischen Längen 13 und Kabeladerdicken 141, 142, 143, 144 der Netzwerkverbindung 12 zugeordnet auf einem Datenträger der Verrechnungseinheit 30 abgespeichert, wobei der Rauschlevel N(f) 40 mittels der Verrechnungseinheit 30 in Abhängigkeit mindestens von Crosstalkparameter Xtalktype und Anzahl Störquellen A basierend auf dem Leistungsspektrum PSD bestimmt wird. D.h.

$$N(f) = \sum_{i,Xtalktype} PSD_{SModem(i)}(f) Hxp(f, L, Xtalktype, A_i)$$

Die Summe geht mit dem Index i über alle Störmodulationen (SModem) in Abhängigkeit ihres Xtalktypes, die auf parallelen Verbindungen der Netzwerkverbindung agieren. $PSD_{SModem(i)}$ ist das Leistungsspektrum des i-ten SModems. Hxp ist die Dämpfung in Abhängigkeit des Crosstalk. Wie erwähnt ist die Crosstalkproblematik das physikalische Phänomen, das bei der Modulation von Daten über ein Kupferkabel auftritt. Benachbarte Kupferkabeldrähte innerhalb eines Kupferkabels erhalten über elektromagnetische Wechselwirkung paarweise Teilsignale, die von Modems erzeugt werden. Dies führt dazu, dass xDSL-Modems, die auf benachbarten Drähten übertragen werden, sich gegenseitig stören. Crosstalk als physikalischer Effekt ist beinahe vernachlässigbar für ISDN (Frequenzbereich bis 120 kHz), wird aber wichtig für z.B. ADSL (Frequenzbereich bis 1 MHz) und ein entscheidender Faktor für VDSL (Frequenzbereich bis 12 MHz). Wie beschrieben bestehen die gebräuchlichen Telefonkupferleitungen aus 2 bis 2400 Kupferdrähten. Um beispielsweise vier Paare benutzen zu können, wird der Datenstrom beim Transmitter in mehrfachparallele Datenströme unterteilt und beim Empfänger wieder rekombiniert, was den effektiven Datendurchsatz um einen Faktor 4 erhöht. Dies würde eine Datenübertragung mit bis zu 100Mbps erlauben. Zusätzlich können im Falle von 4 Paar Kupferdrähten die gleichen vier Paar Drähte dazu benutzt werden, die gleiche Datenmenge gleichzeitig in der umgekehrten Richtung zu transportieren. Die bidirektionale Datenübertragung über jedes Paar Kupferdraht verdoppelt die Informationskapazität, die übermittelt werden kann. Dies verachtfacht in diesem Fall die Datenübertragungsrate gegenüber konventionellen Übertragungen, bei welchen für jeweils eine Richtung zwei Paare benutzt werden. Für die Datenübertragung, wie oben beschrieben, ist das Crosstalkrauschen ein stark limitierender Faktor. Man unterscheidet als Crosstalkarten (Xtalktype) zwischen Near-End Crosstalk (Next) 51, welches das ungewollte Signalkoppeln vom Signalen 50 des Senders (Transmitter) 10 am einen Ende zu den Signalen 50 beim Empfänger (Receiver) 10 am gleichen Ende beschreibt, und Far-End Crosstalk (FEXT) 52, welches das ungewollte Signalkoppeln von Signalen 50 bei der Übertragung zum Empfänger 11 am anderen Ende beschreibt, wobei die Signale 50 bei der Übertragung an Signale 50 von benachbarten Kupferpaardrähten koppelt und beim Empfänger 11 als Rauschen (Noise) erscheint (siehe Figur 1). Normalerweise wird davon ausgegangen, dass NEXT 51 nur eine Near-End Störquelle besitzt. Xtalktype ist somit abhängig vom Ort und dem Stream (up/down), d.h. Xtalktype(Stream, Ort). Gibt es mehr als zwei Kupferdrähte, was üblicherweise der Fall ist (typischerweise sind es zwischen 2 und 2400 Drähte), dann stimmt das obenbeschriebene paarweise koppeln nicht mehr. Z.B. für den Fall, dass vier Paar Drähte gleichzeitig benutzt werden, gibt es jetzt folglich drei ungewollte Störquellen, die mit ihrer Energie an das Signal 50 koppeln. Für A gilt in diesem Fall A=3. Das gleiche gilt für FEXT-Crosstalk 52.

Die Verrechnungseinheit 30 bestimmt die Datentransfermargins mittels eines Gausstransformationsmodul 31 basierend auf den effektiven Signalstärken S(f) der ersten und den entsprechenden Rauschlevel R(f) der zweiten Liste für verschiedene Datenübertragungsmodulationen und/oder Modulationscodierungen für eine vordefinierte Bitrate und speichert die Datentransfermargins den jeweiligen physikalischen Längen 13 und Kabeladerdicken 141, 142, 143, 144 der Netzwerkverbindung 12 zugeordnet auf einem Datenträger der Verrechnungseinheit 30 ab. Mit den effektiven Signalstärken S(f) der ersten Liste und den Rauschlevels N(f) lässt sich mittels der Verrechnungseinheit 30 das Signal S zu Rausch R Verhältnis SNR (Signal to Noise Ratio) bestimmen, wobei:

$$SNR \cong \exp\left( T \int_{-1/2T}^{1/2T} \ln\left( \frac{\sum_n |S(f + n/T)|^2}{\sum_n N(f + n/T)} \right) df \right)$$

Dieser Ausdruck gilt nur für CAP, 2B1Q und PAM-Modulation, nicht aber für DMT-Modulation. DMT wird weiter unten näher beschrieben. T ist dabei der Symbolintervall oder das Halbe der Inversen der Nyquist-Frequenz. Die Nyquist-Frequenz ist die höchst mögliche Frequenz, die noch genau abgetastet (gesampled) werden kann. Die Nyquist-Frequenz ist die halbe Abtastfrequenz (Sampling Frequenz), da ungewollte Frequenzen erzeugt werden, wenn ein Signal abgetastet wird, dessen Frequenz höher als die halbe Abtastfrequenz ist. n ist der Summierungsindex. In der Praxis reicht es normalerweise, dass n von -1 bis 1 läuft. Falls das nicht genügt, können weitere Maxima 0, $\pm 1/T$, $\pm 2/T$ etc. dazu genommen werden, bis die gewünschte Genauigkeit erreicht ist. Die Datentranstransfermargins hängen von den Datenübertragungsmodulationen und/oder Modulationscodierungen ab, wie weiter oben erwähnt wurde. In diesem Ausführungsbeispiel werden wir die Abhängigkeit beispielsweise für HDSL-Modems 2B1Q-Modulation (2 Binary, 1 Quarterary) und CAP-Modulation (Carrierless Amplitude/Phase Modulation) als Beispiel für ADSL DMT-Modulation (Discrete Multitone Technology) zeigen und bezüglich der Modulationscodierungen für Trellis-kodierte Signale. Es ist aber auch klar, dass das erfindungsgemässe Verfahren und System ohne weiteres auch für andere Datenübertragungsmodulationen und/oder Modulationscodierungen wie z.B. PAM (Pulse Amplitute Modulation) etc. gilt. Sowohl 2B1Q-Modulation als auch CAP-Modulation wird bei HDSL-Modems verwendet und besitzt eine vordefinierte Bitrate. DMT-Modulation wird bei ADSL-Modems eingesetzt und besitzt dagegen eine variable Bitrate. CAP und DMT benutzten die gleiche fundamentale Modulationstechnologie: QAM (Quadrature Amplitude Modulation), obwohl diese Technologie unterschiedlich eingesetzt wird. QAM ermöglicht es, dass zwei digitale Trägersignale (Carrier Signal) dieselbe Übertragungsbandbreite besetzen. Dabei werden zwei unabhängige sog. Message-Signale verwendet, um zwei Trägersignale zu modulieren, die eine identische Frequenz haben, aber sich in Amplitude und Phase unterscheiden. QAM-Empfänger können unterscheiden, ob eine kleine oder eine hohe Anzahl Amplituden- und Phasenzustände benötigt werden, um Rauschen (Noise) und Interference z.B. auf einem Kupferdrahtpaar zu umgehen. 2B1Q-Modulation ist auch bekannt als "4 Level Pulse Amplituden Modulation" (PAM). Sie benutzt zwei Voltniveaus für den Signalpulse und nicht wie z.B. AMI (Alternate Mark Insertion) ein Niveau. Indem positive und negative Niveau-Unterscheidung dazugenommen wird, erhält man ein 4 Niveau-Signal. Die Bits werden schliesslich zu je zweien zusammengefasst, welche Paare je einem Voltniveau entsprechen (deshalb 2 Bit). Damit wird die notwendige Signalfrequenz zum Senden der gleichen Bitrate wie beim bipolaren AMI beim 2B1Q halbiert. Bei HDSL-Modem mit 2B1Q- oder CAP-Modulation existiert folgende Abhängigkeit der Datentransfermargins von der SNR:

$$M_c = \frac{SNR}{\xi}$$

wobei $\xi$ in Abhängigkeit der Fehlerrate (Symbol Error Rate) $\varepsilon_S$ bestimmt werden kann. Für LAN (IP) genügt gewöhnlich eine Fehlerrate von $\varepsilon_S = 10^{-7}$, d.h. jedes $10^7$ Bit wird im Mittel falsch übermittelt. Firmen verlangen typischerweise ein $\varepsilon_S = 10^{-12}$ für ihre Firmennetze. Kommt das $\varepsilon_S$ z.B. in die Grössenordnung der übertragenen Datenpacketgrösse (z.B. $10^{-3}$), würde das umgekehrt bedeuten, dass jedes Packet im Durchnitt zweimal übermittelt werden muss, bis es richtig ankommt. Für die 2B1Q-Modulation gilt für $\varepsilon_S$ beispielsweise:

$$\varepsilon_s = 2\left(1 - \frac{1}{M}\right) \cdot G_c\left(\sqrt{\frac{3*\xi}{M^2-1}}\right) \text{ für unkodierte Signale}$$

und

$$\varepsilon_s = 2\left(1 - \frac{1}{M/2}\right) \cdot G_c\left(\sqrt{\frac{3*\xi*10^{0.4}}{(M/2)^2-1}}\right) \text{ für trellis-kodierte Signale,}$$

während für die CAP-Modulation gilt:

$$\varepsilon_s = 4\left(1 - \frac{1}{M}\right) \cdot G_c\left(\sqrt{\frac{3\xi}{M^2-1}}\right) \text{ für unkodierte Signale}$$

und

$$\varepsilon_s = 4\left(1 - \frac{1}{M/\sqrt{2}}\right) \cdot G_c\left(\sqrt{\frac{3(\xi 10^{0.4})}{M^2/2-1}}\right) \text{ für trellis-kodierte Signale.}$$

$G_c$ ist für beide Kodierungen eine komplementäre Gaussfunktion mit:

$$G_c(x) := \int_x^\infty \frac{1}{\sqrt{2\pi}} e^{-x^2/2} dx'$$

und M ist für die 2B1 Q-Modulation die Momentzahl mit M=4 für 2B1 Q, während für die CAP-Modulation M die Konstellationsgrösse MxM ist. T ist wie oben das Symbolintervall oder das Halbe der Inversen der Nyquist-Frequenz. Für ADSL-Modems mit DMT-Modulation ist die Abhängigkeit anders. Wie gesagt besitzt ADSL eine variable Bitrate. Dies zeigt sich ebenfalls in $M_c$. Es gilt:

$$M_c = x_{ref} \frac{2^{\left(\int \log_2\left(1+\frac{\xi(f)}{x_{ref}\Gamma}\right)df\right)/\Delta f} - 1}{2^{D/\Delta f} - 1}$$

wobei $\xi(f)$ das Signal-zu-Rausch-Verhältnis $S(f)/N(f)$ ist. $x_{ref}$ ist ein Referenzmargin der in diesem Ausführungsbeispiel typischerweise als 6 dB gewählt wurde, d.h. $x_{ref} = 10^{0.6}$. Aber auch andere Werte als Referenzmargins $x_{ref}$ sind vorstellbar. $\Delta f$ ist die ganze Frequenzbreite bzw. das ganze Frequenzband, welches für die Übertragung benutzt wird. Die Integration wird über die Frequenz ausgeführt. D ist die Bitrate beispielsweise in b/s (Bits/Sekunden). $\Gamma$ ist ein Korrekturfaktor. In diesem Ausführungsbeispiel liegt $\Gamma$ beispielsweise bei $\Gamma=9.55$. Die Integration wird in diesem Ausführungsbeispiel über die Frequenz f durchgeführt. Analog dazu kann sie aber auch über der Zeit oder einer anderen physikalischen Grösse durchgeführt werden, wobei der Ausdruck oben dann entsprechend angepasst werden muss.

Im allgemeinen stimmen die wie oben erhaltenen Datentransfermargins nicht mit dem Experiment überein. Deshalb bestimmt die Verrechnungseinheit 30 die effektiven Datentransfermargins mittels mindestens eines Korrekturfaktors basierend auf den abgespeicherten Datentransfermargins. Der Korrekturfaktor wurde für dieses Ausführungsbeispiel so gewählt, dass eine genügende Übereinstimmung zwischen den erhaltenen Datentransfermargins und den effektiven Datentransfermargins erreicht wird. Als genügend wurde für hier z.B. +/- 3dB angenommen, wobei auch andere Werte vorstellbar sind. Um diese maximale Abweichung von +/- 3dB zu erhalten, werden zwei Parameter bestimmt. $M_{imp}$ berücksichtigt die gute oder schlechte Implementation eines Modems durch den Hersteller. $M_{imp}$ wurde aufgrund der Tatsache eingeführt, dass gleiche Modems mit vergleichbarer Hardware und gleichen Datenübertragungsmodulationen und/oder Modulationscodierungen jedoch von unterschiedlichen Herstellern bei der Übersetzung des analogen in ein digitales Signal und umgekehrt, unterschiedliche Resultate liefern, was ihre maximale Bitrate oder ihre maximale Reichweite für eine bestimmt Netzwerkverbindung betrifft. Dies muss für die Datentransfermargins korrigiert werden. Als zweiter Parameter wurde $N_{int}$ eingeführt. $N_{int}$ berücksichtigt das Quantisierungsrauschen im Modem (Analogzu Digitalwandlung), sowie eine mögliche schlechte Anpassung der Equalizer bei der Übertragung. Findet eine Übertragung statt zwischen einem Sender 10 und einem Empfänger 11 passt der Equalizer im Modem die Übertragungsrate den Bedingungen der Netzwerkverbindung wie z.B. der Liniendämpfung, Phasenverzerrung etc. mittels einer Trainingssequenz an, welche zwischen den beiden kommunizierenden Modems hin- und hergeschickt werden. Eine schlechte Anpassung durch die Equalizer führt zu einer Verzerrung der Resultate und muss korrigiert werden. Für lineare Equalizer kann beispielsweise folgender Ausdruck verwendet werden:

$$SNR_{LinearEq} = \left( T \int_{-1/2T}^{1/2T} \frac{df}{X_s(f)} \right)^{-1}$$

mit

$$X_s(f) = \sum_n \frac{|S_e(f + n/T)|^2}{N_e(f + n/T)} + 1$$

wobei $SNR_{linearEq}$ das Signal zu Rausch Verhältnis, $S_e$ das Signal, das der Equalizer erhält, $N_e$ das Rauschen und f die Frequenz ist. Für einen Decision Feedback Equalizer (DFE) kann beispielsweise folgender Ausdruck verwendet werden:

$$SNR_{DFE} = \exp\left( T \int_{-1/2T}^{1/2T} \ln(X_s(f)) df \right)$$

mit

$$X_s(f) = \sum_n \frac{|S_e(f + n/T)|^2}{N_e(f + n/T)} + 1$$

wobei wieder $SNR_{linearEq}$ das Signal zu Rausch Verhältnis, $S_e$ wie oben das Signal, das der Equalizer erhält, $N_e$ das Rauschen und $f$ die Frequenz ist. Die Verrechnungseinheit 30 kann zur Bestimmung von $SNR_{DFE}$ z.B. folgende Näherung verwenden:

$$SNR_{DFE} \cong \exp\left( T \int_{-1/2T}^{1/2T} \ln\left( \frac{\sum_n |S_e(f + n/T)|^2}{\sum_n N_e(f + n/T)} \right) df \right)$$

.

Damit folgt für die effektiven Datenmargins: $S(f) = PSD_{Modem}(f)H^2(f,L,D)$ wie vorher. Das Rauschen wird wie folgt korrigiert:

$$N(f) = \sum_i PSD_{SModem(i)}(f) \bullet Hxp^2(f, L, D, xtalktype_i, n_i) + N_{int}$$

Die Korrektur kann in der Verrechnungseinheit 30 hardware- oder softwaremässig in einem Modul implementiert sein. Es ist wichtig darauf hinzuweisen, dass mit einem solchen Modul basierend auf der Korrektur $N_{int}$ ein variabler Rauschfaktor eingeführt wird, der beispielsweise Equalizerabstimmung etc. berüchsichtigen kann. Dies kann im Stand der Technik so nicht gefunden werden und gehört u.a. zu den wesentlichen Vorteilen der Erfindung. Die effektiven Datentransfermargins $M_{eff}$ werden durch $M_{eff} = M_c - M_{imp}$, welches zusätzlich zu $N_{int}$ wie oben erwähnt, berücksichtigt wird. Die korrekten Werte für $M_c$ und $N_{int}$ können durch die Verrechnungseinheit 30 im Vergleich mit experimentellen Daten erhalten werden. Typischerweise muss die Verrechnungseinheit 30 dazu Zugriff auf Daten verschiedener Experimente haben, um die Parameter korrekt innerhalb der gewünschten Abweichung bestimmen zu können. Mittels der Korrekturfaktoren, die folglich eine mittlere Abweichung der abgespeicherten Datentransfermargins zu den effektiven Datentransfermargins umfassen, werden wie oben beschrieben die effektiven Datentransfermargins bestimmt und ebenfalls den jeweiligen physikalischen Längen L. 13 und Kabeladerdicken D 141, 142, 143, 144 der Netzwerkverbindung 12 zugeordnet auf einem Datenträger der Verrechnungseinheit 30 abgespeichert. Es ist darauf hinzuweisen, dass die Korrekturfaktoren nicht unbedingt lineare Faktoren, d.h. Konstante sein müssen, sondern ebenso gut Korrekturfunktionen mit einer nicht linearen Abhängigkeit umfassen können. Damit könnten je nach Anwendung auch kompliziertere Abweichungen der experimentellen Daten berücksichtigt werden. Mittels der abgespeicherten Matrizen mit den Datentransfermargins bestimmt die Verrechnungseinheit 30 schliesslich basierend auf den abgespeicherten effektive Datentransfermargins anhand der bekannten physikalischen Länge 13 der zu bestimmenden Netzwerkverbindung 12 zwischen dem Sender 10 und dem Empfänger 11 den Datentransfermargin für eine bestimmte Netzwerkverbindung 12. Die Datentransfermargins werden wie mehrfach erwähnt in dB angegeben. Für Werte >0 dB läuft das Modem typischerweise, während es für Werte <0 dB nicht läuft. Um einen guten sicheren Betrieb zu garantieren, kann es sinnvoll sein, als untere Grenze z.B. 6 dB zu wählen. Allgemein eignen sich aber auch andere Datentransfermargins als untere Grenze, z.B. Werte zwischen 3 dB und 9 dB. Durch die gleiche Anordnung lässt sich für ADSL-Modem, wie aus den obigen Angaben folgt, anstelle von den Matrizen mit den Datentransfermargins entsprechend Matrizen mit Bitraten für verschiedenen Netzwerkverbindungen z.B. für einen Datentransfermargin von 6 dB bestimmen. Damit folgt zur Bestimmung der Matrizen mit Bitraten 6 dB = $M_{eff}$. Bei den HDSL-Modems macht dies insofern keinen Sinn, da bei HDSL die Kodierungen, wie z.B. 2B1Q oder CAP mit einer konstanten Bitrate, hier z.B. 2.048 Mb/s, arbeiten. Der Grund für diesen Unterschied zu den ADSL-Modems liegt darin, dass HDSL-Systeme nur für einen Anschluss mit höherer Bitrate ausgelegt wurden und nur die Sicherheit (SNR) interessiert.

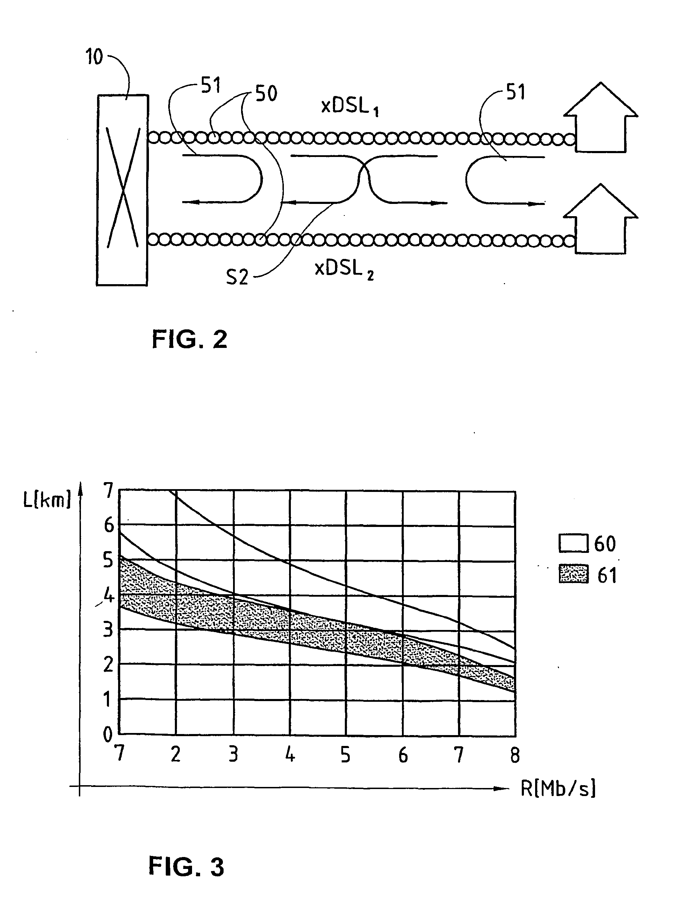

Figur 3 zeigt die Übertragungsdistanz der Netzwerkverbindung in Abhängigkeit der Übertragungsrate (Bitrate) für ADSL-Modems. Die Referenznummern 60 und 61 bezeichnen dabei unterschiedliche Rauschumgebungen. Die Bitraten wurden, wie oben beschrieben, basierend auf den gespeicherten Matrizen bzw. Listen dargestellt.

# EP 1 444 802 B1

**Patentansprüche**

1. Verfahren zum Bestimmen von Datentransfermargins für Netzwerkverbindungen, wobei die physikalische Länge (13) einer zu bestimmenden Netzwerkverbindung (12) zwischen einem Sender (10) und einem Empfänger (11) bekannt ist, wobei

   ein Leistungsspektrum in Abhängigkeit der Übertragungsfrequenz für mögliche Modemtypen (101, 102, 103, 104) mittels einer Leistungsmessvorrichtung (20) gemessen wird und auf einen Datenträger einer Verrechnungseinheit (30) übertragen wird,

   mit der Verrechnungseinheit (30) die Dämpfung für verschiedene physikalische Längen (13) und Kabeladerdicken (141, 142, 143, 144) einer Netzwerkverbindung (12) bestimmt wird und die effektiven Signalstärken beim Empfänger (11) basierend auf der Dämpfung sowie dem Leistungsspektrum den jeweiligen physikalischen Längen (13) und Kabeladerdicken (141, 142, 143, 144) zugeordnet in einer ersten Liste auf einem Datenträger der Verrechnungseinheit (30) abgespeichert werden,

   in einer zweite Liste der Rauschlevel (40) den jeweiligen physikalischen Längen (13) und Kabeladerdicken (141, 142, 143, 144) der Netzwerkverbindung (12) zugeordnet auf einem Datenträger der Verrechnungseinheit abgespeichert wird, wobei der Rauschlevel (40) mittels der Verrechnungseinheit (30) in Abhängigkeit mindestens von Crosstalkparameter, Anzahl Störquellen basierend auf dem Leistungsspektrum bestimmt wird,

   die Verrechnungseinheit (30) mittels eines Gausstransformationsmoduls (31) basierend auf den effektiven Signalstärken der ersten und den entsprechenden Rauschlevels der zweiten Liste für verschiedene Datenübertragungsmodulationen und/oder Modulationscodierungen die Datentransfermargins für eine vordefinierte Bitrate bestimmt und den jeweiligen physikalischen Längen (13) und Kabeladerdicken (141, 142, 143, 144) der Netzwerkverbindung (12) zugeordnet auf einem Datenträger der Verrechnungseinheit (30) abspeichert,

   die Verrechnungseinheit (30) die effektiven Datentransfermargins mittels mindestens eines Korrekturfaktors basierend auf den abgespeicherten Datentransfermargins bestimmt und den jeweiligen physikalischen Längen (13) und Kabeladerdicken (141, 142, 143, 144) der Netzwerkverbindung (12) zugeordnet auf einem Datenträger der Verrechnungseinheit (30) abspeichert, wobei der Korrekturfaktor eine mittlere Abweichung der abgespeicherten Datentransfermargins zu den effektiven Datentransfermargins und/oder ein Equalizerfaktor zur Korrektur der Equalizerabstimmung umfasst, und

   die Verrechnungseinheit (30) basierend auf den abgespeicherten effektive Datentransfermargins anhand der bekannten physikalischen Länge (13) der zu bestimmenden Netzwerkverbindung (12) zwischen dem Sender (10) und dem Empfänger (11) den Datentransfermargin für die jeweilige Netzwerkverbindung (12) bestimmt.

2. Verfahren nach Anspruch 1, **dadurch gekennzeichnet, dass** der Korrekturfaktor eine nichtlineare Abhängigkeit bezüglich der physikalischen Längen (13) und/oder Kabeladerdicken (141, 142, 143, 144) wiedergibt.

3. Verfahren nach einem der Ansprüche 1 oder 2, **dadurch gekennzeichnet, dass** das Leistungsspektrum in Abhängigkeit der Übertragungsfrequenz für ADSL- und/oder SDSL- und/oder HDSL- und/oder und/oder VDSL-Modemtypen (101, 102, 103, 104) gemessen wird.

4. Verfahren nach Anspruch 3, **dadurch gekennzeichnet, dass** die möglichen SDSL-Modemtypen (101, 102, 103, 104) mindestens einen G.991.2-Modemtypen und/oder die ADSL-Modemtypen (101, 102, 103, 104) mindestens einen G.992.2-Modemtypen umfassen.

5. Verfahren nach einem der Ansprüche 1 bis 4, **dadurch gekennzeichnet, dass** mittels des Gausstransformationsmoduls (31) die Datentransfermargins für mindestens die Datenübertragungsmodulationen 2B1Q und/oder CAP und/oder DMT und/oder PAM bestimmt werden.

6. Verfahren nach einem der Ansprüche 1 bis 5, **dadurch gekennzeichnet, dass** mittels des Gausstransformationsmoduls (31) die Datentransfermargins für mindestens die Trellis-Modulationscodierung bestimmt werden.

7. Computerprogrammprodukt, das direkt in den internen Speicher eines digitalen Computers geladen werden kann und Softwarecodeabschnitte umfasst, mit denen die Schritte gemäss einem der Ansprüche 1 bis 6 ausgeführt werden, wenn das Produkt auf einem Computer läuft.

8. Verfahren zum Bestimmen von Bitraten für Netzwerkverbindungen, wobei die physikalische Länge (13) einer Netzwerkverbindung (12) zwischen einem Sender (10) und einem Empfänger (11) bekannt ist, wobei

   ein Leistungsspektrum in Abhängigkeit der Übertragungsfrequenz für mögliche Modemtypen (101, 102, 103, 104) mittels der Leistungsmessvorrichtung (20) gemessen wird und auf einen Datenträger eine Verrechnungseinheit (30) übertragen wird,

mit der Verrechnungseinheit (30) die Dämpfung für verschiedene physikalische Längen (13) und Kabeladerdicken (141, 142, 143, 144) einer Netzwerkverbindung (12) bestimmt wird und die effektiven Signalstärken beim Empfänger (11) basierend auf der Dämpfung sowie dem Leistungsspektrum den jeweiligen physikalischen Längen (13) und Kabeladerdicken (141, 142, 143, 144) zugeordnet in einer ersten Liste auf einem Datenträger der Verrechungseinheit (30) abgespeichert wird,

in einer zweite Liste der Rauschlevel (40) den jeweiligen physikalischen Längen (13) und Kabeladerdicken (141, 142, 143, 144) der Netzwerkverbindung (12) zugeordnet auf einem Datenträger der Verrechnungseinheit abgespeichert wird, wobei der Rauschlevel (40) mittels der Verrechnungseinheit (30) in Abhängigkeit mindestens von Crosstalkparameter und Anzahl Störquellen basierend auf dem Leistungsspektrum bestimmt wird,

die Verrechnungseinheit (30) mittels eines Gausstransformationsmoduls (31) basierend auf den effektiven Signalstärken der ersten und den entsprechenden Rauschlevels der zweiten Liste für verschiedene Datenübertragungsmodulationen und/oder Modulationscodierungen die Bitraten für einen vordefinierten Datentransfermargin bestimmt und die Bitrate den jeweiligen physikalischen Längen (13) und Kabeladerdicken (141, 142, 143, 144) der Netzwerkverbindung (12) zugeordnet auf einem Datenträger der Verrechnungseinheit (30) abspeichert,

die Verrechnungseinheit (30) die effektiven Bitraten mittels eines Korrekturfaktors basierend auf den abgespeicherten Bitraten bestimmt und die effektiven Bitraten den jeweiligen physikalischen Längen (13) und Kabeladerdicken (141, 142, 143, 144) der Netzwerkverbindung (12) zugeordnet auf einem Datenträger der Verrechnungseinheit (30) abspeichert, wobei der Korrekturfaktor eine mittlere Abweichung der abgespeicherten Bitraten zu den effektiven Bitraten und/oder ein Equalizerfaktor zur Korrektur der Equalizerabstimmung umfasst, und

die Verrechnungseinheit (30) basierend auf den abgespeicherten effektive Bitraten anhand der bekannten physikalischen Länge (13) der zu bestimmenden Netzwerkverbindung (12) zwischen dem Sender (10) und dem Empfänger (11) die Bitrate für die jeweilige Netzwerkverbindung (12) bestimmt.

9. Verfahren nach Anspruch 8, **dadurch gekennzeichnet, dass** mittels des Gaustransformationsmoduls (31) die Bitraten für einen Datentransfermargin zwischen 3 und 9 dB bestimmt werden.

10. Verfahren nach Anspruch 8, **dadurch gekennzeichnet, dass** mittels des Gaustransformationsmoduls (31) die Bitraten für einen Datentransfermargin 6 dB bestimmt werden.

11. Verfahren nach einem der Ansprüche 8 bis 10, **dadurch gekennzeichnet, dass** der Korrekturfaktor eine nichtlineare Abhängigkeit bezüglich der physikalischen Längen (13) und/oder Kabeladerdicken (141, 142, 143, 144) wiedergibt.

12. Verfahren nach einem der Ansprüche 8 bis 11, **dadurch gekennzeichnet, dass** das Leistungsspektrum in Abhängigkeit der Übertragungsfrequenz für ADSL- und/oder SDSL- und/oder HDSL- und/oder und/oder VDSL-Modemtypen (101, 102, 103, 104) gemessen wird.

13. Verfahren nach Anspruch 12, **dadurch gekennzeichnet, dass** die möglichen SDSL-Modemtypen (101, 102, 103, 104) mindestens einen G.991.2-Modemtypen und/oder die ADSL-Modemtypen (101, 102, 103, 104) mindestens einen G.992.2-Modemtypen umfassen.

14. Verfahren nach einem der Ansprüche 8 bis 13, **dadurch gekennzeichnet, dass** mittels des Gaustransformationsmoduls (31) die Bitraten für mindestens die Datenübertragungsmodulationen 2B1Q und/oder CAP und/oder DMT und/oder PAM bestimmt werden.

15. Verfahren nach einem der Ansprüche 8 bis 14, **dadurch gekennzeichnet, dass** mittels des Gaustransformationsmoduls (31) die Bitraten für mindestens die Trellis-Modulationscodierung bestimmt werden.

16. Computerprogrammprodukt, das direkt in den internen Speicher eines digitalen Computers geladen werden kann und Softwarecodeabschnitte umfasst, mit denen die Schritte gemäss einem der Ansprüche 8 bis 15 ausgeführt werden, wenn das Produkt auf einem Computer läuft.

17. System zum Bestimmen von Datentransfermargins für Netzwerkverbindungen, wobei die physikalische Länge (13) einer zu bestimmenden Netzwerkverbindung (12) zwischen einem Sender (10) und einem Empfänger (11) bekannt ist, wobei

das System eine Messvorrichtung (20) zum Messen eines Leistungsspektrums in Abhängigkeit der Übertragungsfrequenz für mögliche Modemtypen (101, 102, 103, 104) umfasst, sowie einen Datenträger einer Verrechnungseinheit (30), auf welchem das Leistungsspektrum abspeicherbar ist,

die Verrechnungseinheit (30) Mittel umfasst zur Bestimmung der Dämpfung für verschiedene physikalische Längen (13) und Kabeladerdicken (141, 142, 143, 144) einer Netzwerkverbindung (12), wobei die effektiven Signalstärken beim Empfänger (11) basierend auf der Dämpfung sowie dem Leistungsspektrum den jeweiligen physikalischen Längen (13) und Kabeladerdicken (141, 142, 143, 144) zugeordnet in einer ersten Liste auf einem Datenträger der Verrechungseinheit (30) abgespeichert wird,

die Verrechnungseinheit (30) Mittel umfasst zur Bestimmung des Rauschlevels (40) in Abhängigkeit mindestens von Crosstalkparameter, Anzahl Störquellen basierend auf dem Leistungsspektrum, wobei der Rauschlevel (40) in einer zweiten Liste den jeweiligen physikalischen Längen (13) und Kabeladerdicken (141, 142, 143, 144) der Netzwerkverbindung (12) zugeordnet auf einem Datenträger der Verrechnungseinheit abgespeichert wird,

die Verrechnungseinheit (30) ein Gausstransformationsmodul (31) umfasst zur Bestimmung von Datentransfermargins für eine vordefinierte Bitrate basierend auf den effektiven Signalstärken der ersten und den entsprechenden Rauschlevels der zweiten Liste für verschiedene Datenübertragungsmodulationen und/oder Modulationscodierungen, wobei die Datentransfermargins den jeweiligen physikalischen Längen (13) und Kabeladerdicken (141, 142, 143, 144) der Netzwerkverbindung (12) zugeordnet auf einem Datenträger der Verrechnungseinheit (30) abspeichert werden,

die Verrechnungseinheit (30) ein Korrekturmodul umfasst, welches die effektiven Datentransfermargins mittels mindestens eines Korrekturfaktors basierend auf den abgespeicherten Datentransfermargins bestimmt und den jeweiligen physikalischen Längen (13) und Kabeladerdicken (141, 142, 143, 144) der Netzwerkverbindung (12) zugeordnet auf einem Datenträger der Verrechnungseinheit (30) abspeichert, wobei der Korrekturfaktor eine mittlere Abweichung der abgespeicherten Datentransfermargins zu den effektiven Datentransfermargins und/oder ein Equalizerfaktor zur Korrektur der Equalizerabstimmung umfasst.

## Claims

1.  Method for determining data transfer margins for network connections, the physical length (13) of a network connection to be determined (12) between a transmitter (10) and a receiver (11) being known,

    a power spectrum being measured by means of a power measuring device (20) in dependence upon the transfer frequency for possible modem types (101, 102, 103, 104), and being transmitted onto a data carrier of a calculating unit (30),

    with the calculating unit (30) the attenuation being determined for different physical lengths (13) and cable wire thicknesses (141, 142, 143, 144) of a network connection (12), and the actual signal strengths at the receiver (11), based on the attenuation as well as the power spectrum, being stored, assigned to the respective physical lengths (13) and cable wire thicknesses (141, 142, 143, 144), in a first list on a data carrier of the calculating unit (30),

    in a second list, the noise level (40) being stored, assigned to the respective physical lengths (13) and cable wire thicknesses (141, 142, 143, 144) of the network connection (12), on a data carrier of the calculating unit, the noise level (40) being determined by means of the calculating unit (30), on the basis of the power spectrum, depending upon at least crosstalk parameters, number of interference sources,

    by means of a Gaussian transformation module (31), the calculating unit (30) determines the data transfer margins for a predefined bit rate based on the actual signal strengths of the first and the corresponding noise level of the second list for different data transmission modulations and/or modulation codings, and stores them, assigned to the respective physical lengths (13) and cable wire thicknesses (141, 142, 143, 144) of the network connection (12), on a data carrier of the calculating unit (30),

    the calculating unit (30) determines, based on the stored data transfer margins, the actual data transfer margins by means of at least one correction factor and stores them, assigned to the respective physical lengths (13) and cable wire thicknesses (141, 142, 143, 144) of the network connection (12), on a data carrier of the calculating unit (30), the correction factor comprising an average deviation of the stored data transfer margins with respect to the actual data transfer margins and/or an equalizer factor for correction of the equalizer adjustment, and

    based on the stored actual data transfer margins, with reference to the known physical length (13) of the network connection to be determined (12) between the transmitter (10) and the receiver (11), the calculating unit (30) determines the data transfer margin for the respective network connection (12).

2.  Method according to claim 1, **characterized in that** the correction factor reflects a non-linear dependency with respect to the physical lengths (13) and/or cable wire thicknesses (141, 142, 143, 144).

3.  Method according to one of the claims 1 or 2, **characterized in that** the power spectrum is measured in dependence upon the transmission frequency for ADSL and/or SDSL and/or HDSL and/or and/or <sic.> VDSL modem types (101, 102, 103, 104).

4. Method according to claim 3, **characterized in that** the possible SDSL modem types (101, 102, 103, 104) comprise at least one G.991.2 modem type and/or the ADSL modem types (101, 102, 103, 104) at least one G.992.2 modem type.

5. Method according to one of the claims 1 to 4, **characterized in that** by means of the Gaussian transformation module (31) the data transfer margins are calculated for at least the data transmission modulations 2B1Q and/or CAP and/or DMT and/or PAM.

6. Method according to one of the claims 1 to 5, **characterized in that** the data transfer margins are determined for at least the trellis modulation coding by means of the Gaussian transformation module (31).

7. Computer program product, which can be loaded directly into the internal memory of a digital computer and comprises software code sections with which the steps according to one of the claims 1 to 6 are able to be executed when the product runs on a computer.

8. Method for determining bit rates for network connections, the physical length (13) of a network connection (12) between a transmitter (10) and a receiver (11) being known,
a power spectrum being measured by means of a power measuring device (20) in dependence upon the transfer frequency for possible modem types (101, 102, 103, 104) and being transmitted onto a data carrier of a calculating unit (30),
with the calculating unit (30) the attenuation being determined for different physical lengths (13) and cable wire thicknesses (141, 142, 143, 144) of a network connection (12), and the actual signal strengths at the receiver (11), based on the attenuation as well as the power spectrum, being stored, assigned to the respective physical lengths (13) and cable wire thicknesses (141, 142, 143, 144), in a first list on a data carrier of the calculating unit (30),
in a second list, the noise level (40) being stored, assigned to the respective physical lengths (13) and cable wire thicknesses (141, 142, 143, 144) of the network connection (12), on a data carrier of the calculating unit, the noise level (40) being determined on the basis of the power spectrum by means of the calculating unit (30) depending upon at least crosstalk parameters and number of interference sources,
by means of a Gaussian transformation module (31), based on the actual signal strengths of the first and the corresponding noise level of the second list for different data transmission modulations and/or modulation codings, the calculating unit (30) determining the bit rates for a predefined data transfer margin, and storing the bit rates, assigned to the respective physical lengths (13) and cable wire thicknesses (141, 142, 143, 144) of the network connection (12), on a data carrier of the calculating unit (30),
the calculating unit (30) determining, based on the stored bit rates, the actual bit rates by means of a correction factor, and storing the actual bit rates, assigned to the respective physical lengths (13) and cable wire thicknesses (141, 142, 143, 144) of the network connection (12), on a data carrier of the calculating unit (30), the correction factor comprising an average deviation of the stored bit rates with respect to the actual bit rates and/or an equalizer factor for correction of the equalizer adjustment, and
based on the stored actual bit rates, with reference to the known physical length (13) of the network connection to be determined (12) between the transmitter (10) and the receiver (11), the calculating unit (30) determining the bit rate for the respective network connection (12).

9. Method according to claim 8, **characterized in that** by means of the Gaussian transformation module (31) the bit rates are determined for a data transfer margin between 3 and 9 dB.

10. Method according to claim 8, **characterized in that** by means of the Gaussian transformation module (31) the bit rates are determined for a 6 dB data transfer margin.

11. Method according to one of the claims 8 to 10, **characterized in that** the correction factor reflects a non-linear dependency with respect to the physical lengths (13) and/or cable wire thicknesses (141, 142, 143, 144).

12. Method according to one of the claims 8 to 11, **characterized in that** the power spectrum is measured in dependence upon the transmission frequency for ADSL and/or SDSL and/or HDSL and/or and/or <sic.> VDSL modem types (101, 102, 103, 104).

13. Method according to claim 12, **characterized in that** the possible SDSL modem types (101, 102, 103, 104) comprise at least one G.991.2 modem type and/or the ADSL modem types (101, 102, 103, 104) at least one G.992.2 modem type.

**14.** Method according to one of the claims 8 to 13, **characterized in that** by means of the Gaussian transformation module (31) the bit rates are determined for at least the data transmission modulations 2B1Q and/or CAP and/or DMT and/or PAM.

**15.** Method according to one of the claims 8 to 14, **characterized in that** by means of the Gaussian transformation module (31) the bit rates are determined for at least the trellis modulation coding.

**16.** Computer program product, which is able to be loaded directly into the internal memory of a digital computer and comprises software code sections with which the steps according to one of the claims 8 to 15 are executed when the product runs on a computer.

**17.** System for determining data transfer margins for network connections, the physical length (13) of a network connection to be determined (12) between a transmitter (10) and a receiver (11) being known,
the system comprising a measuring device (20) for measuring a power spectrum in dependence upon the transmission frequency for possible modem types (101, 102, 103, 104), as well as a data carrier of a calculating unit (30), on which the power spectrum is storable,
the calculating unit (30) comprising means for determining the attenuation for different physical lengths (13) and cable wire thicknesses (141, 142, 143, 144) of a network connection (12), the actual signal strengths at the receiver (11), based on the attenuation as well as the power spectrum, being stored, assigned to the respective physical lengths (13) and cable wire thicknesses (141, 142, 143, 144), in a first list on a data carrier of the calculating unit (30), the calculating unit (30) comprising means for determining the noise level (40), based on the power spectrum, depending upon at least crosstalk parameters, number of interference sources, the noise level (40) being stored, assigned to the respective physical lengths (13) and cable wire thicknesses (141, 142, 143, 144) of the network connection (12), in a second list on a data carrier of the calculating unit,
the calculating unit (30) comprising a Gaussian transformation module (31) for determining data transfer margins for a predefined bit rate based on the actual signal strengths of the first and the corresponding noise levels of the second list for different data transmission modulations and/or modulation codings, the data transfer margins being stored, assigned to the respective physical lengths (13) and cable wire thicknesses (141, 142, 143, 144) of the network connection (12), on a data carrier of the calculating unit (30),
the calculating unit (30) comprising a correction module, which determines, based on the stored data transfer margins, the actual data transfer margins by means of at least one correction factor, and stores them, assigned to the respective physical lengths (13) and cable wire thicknesses (141, 142, 143, 144) of the network connection (12), on a data carrier of the calculating unit (30), the correction factor comprising an average deviation of the stored data transfer margins with respect to the actual data transfer margins and/or an equalizer factor for correction of the equalizer adjustment.

## Revendications

**1.** Procédé pour la détermination de marges de transfert de données pour des connexions réseau, la longueur physique (13) d'une connexion de réseau à déterminer (12) entre un émetteur (10) et un récepteur (11) étant connue,
un spectre de puissance étant mesuré en fonction de la fréquence de transmission pour des types de modem possibles (101, 102, 103, 104) au moyen d'un dispositif de mesure de puissance (20) et étant transmis à un support de données d'une unité de calcul (30),
l'unité de calcul (30) déterminant l'affaiblissement pour les différentes longueurs physiques (13) et des épaisseurs d'âmes de câbles (141, 142, 143, 144) d'une connexion de réseau (12) les intensités de signaux effectives pour le récepteur (11) étant stockées et associées en se basant sur l'affaiblissement et le spectre de puissance aux longueurs physiques (13) et épaisseurs d'âmes de câble (141, 142, 143, 144) respectives dans une première liste sur le support de données de l'unité de calcul (30),
dans une seconde liste, le niveau de bruit (40) étant stocké et associé aux longueurs physiques (13) et épaisseurs d'âmes de câble (141, 142, 143, 144) respectives de la connexion réseau (12) sur un support de données de l'unité de calcul (12), le niveau de bruit (40) de l'unité de calcul (30) étant déterminé en fonction d'au moins des paramètres de diaphonie, du nombre de sources parasites en se basant sur le spectre de puissance,
l'unité de calcul (30) déterminant au moyen d'un module de transformation de Gauss (31) en se basant sur les intensités de signal effectives des premiers et des niveaux de bruit correspondants de la seconde liste pour différentes modulations de transfert de données et/ou de codages de modulation, les marges de transfert de données pour un débit binaire prédéfini, lesquelles sont associées aux longueurs physiques (13) et épaisseurs d'âmes de câble (141, 142, 143, 144) respectives de la connexion réseau (12) et stockées sur un support de données de l'unité de calcul (30),

l'unité de calcul (30) déterminant les marges de transfert de données effectives au moyen d'au moins un facteur de correction en se basant sur les marges de transfert de données stockées et les associant aux longueurs physiques (13) et épaisseurs d'âmes de câble (141, 142, 143, 144) respectives de la connexion réseau (12) et les stockant sur un support de données de l'unité de calcul (30), le facteur de correction comprenant une divergence moyenne des marges de transfert de données stockées par rapport aux marges de transfert de données effectives et/ou un facteur égaliseur pour la correction de la syntonisation d'égaliseur, et

l'unité de calcul (30) déterminant la marge de transfert de données pour la connexion réseau (12) respective en se basant sur les marges de transfert de données effectives stockées à l'aide des longueurs physiques (13) stockées de la connexion réseau (12) à déterminer entre l'émetteur (10) et le récepteur (11).

**2.** Procédé selon la revendication 1, **caractérisé en ce que** le facteur de correction reproduit une dépendance non linéaire par rapport aux longueurs physiques (13) et épaisseurs d'âmes de câble (141, 142, 143, 144).

**3.** Procédé selon l'une des revendications 1 ou 2, **caractérisé en ce que** le spectre de puissance est mesuré en fonction de la fréquence de transmission pour des types de modem (101, 102, 103, 104) ADSL et/ou SDSL et/ou HDSL et/ou VDSL.

**4.** Procédé selon la revendication 3, **caractérisé en ce que** les types de modem possibles SDSL (101, 102, 103, 104) comprennent au moins un type de modem G.991.2 et/ou les types de modem ADSL (101, 102, 103, 104) au moins un type de modem G.992.2.

**5.** Procédé selon l'une des revendications 1 à 4, **caractérisé en ce qu'**au moyen du module de transformation de Gauss (31), les marges de transfert de données sont définies pour au moins les modulations de transfert de données 2B1Q et/ou CAP et/ou DMT et/ou PAM.

**6.** Procédé selon l'une des revendications 1 à 5, **caractérisé en ce qu'**au moyen du module de transformation de Gauss (31), les marges de transfert de données sont définies pour au moins le codage de modulation en treillis.

**7.** Produit de programme informatique qui peut être directement chargé dans la mémoire interne d'un ordinateur numérique et qui comprend des sections de code logiciel avec les étapes selon l'une des revendications 1 à 6 sont exécutées, quand le produit tourne sur un ordinateur.

**8.** Procédé pour la détermination débits binaires pour des connexions réseau, la longueur physique (13) d'une connexion réseau à déterminer (12) entre un émetteur (10) et un récepteur (11) étant connue,

un spectre de puissance étant mesuré en fonction de la fréquence de transmission pour des types de modem possibles (101, 102, 103, 104) au moyen d'un dispositif de mesure de puissance (20) et étant transmis à un support de données d'une unité de calcul (30),

l'unité de calcul (30) déterminant l'affaiblissement pour les différentes longueurs physiques (13) et des épaisseurs d'âmes de câbles (141, 142, 143, 144) d'une connexion de réseau (12) et les intensités de signaux effectives pour le récepteur (11) étant stockées et associées en se basant sur l'affaiblissement et le spectre de puissance aux longueurs physiques (13) et épaisseurs d'âmes de câble (141, 142, 143, 144) respectives dans une première liste sur le support de données de l'unité de calcul (30),

dans une seconde liste, le niveau de bruit (40) étant stocké et associé aux longueurs physiques (13) et épaisseurs d'âmes de câble (141, 142, 143, 144) respectives de la connexion réseau (12) sur un support de données de l'unité de calcul (12), le niveau de bruit (40) de l'unité de calcul (30) étant déterminé en fonction d'au moins des paramètres de diaphonie, du nombre de sources parasites en se basant sur le spectre de puissance,

l'unité de calcul (30) déterminant au moyen d'un module de transformation de Gauss (31) en se basant sur les intensités de signal effectives des premiers et des niveaux de bruit correspondant de la seconde liste pour différentes modulations de transfert de données et/ou de codages de modulation, les débits binaires pour une marge de transfert de données prédéfinie, et les débits binaires étant associés aux longueurs physiques (13) et épaisseurs d'âmes de câble (141, 142, 143, 144) respectives de la connexion réseau (12) et stockées sur un support de données de l'unité de calcul (30),

l'unité de calcul (30) déterminant les débits binaires effectifs au moyen d'au moins un facteur de correction en se basant sur les débits binaires stockés et les associant aux longueurs physiques (13) et épaisseurs d'âmes de câble (141, 142, 143, 144) respectives de la connexion réseau (12) et les stockant sur un support de données de l'unité de calcul (30), le facteur de correction comprenant une divergence moyenne des débits binaires stockés par rapport aux débits binaires effectifs et/ou un facteur égaliseur pour la correction de syntonisation d'égaliseur, et

l'unité de calcul (30) déterminant le débit binaire pour la connexion réseau (12) respective en se basant sur les débits binaires effectifs stockés à l'aide de la longueur physique stockée (13) de la connexion réseau (12) à déterminer entre l'émetteur (10) et le récepteur (11).

9. Procédé selon la revendication 8, **caractérisé en ce qu'**au moyen du module de transformation de Gauss (31), les débits binaires sont définis pour une marge de transfert de données comprise entre 3 et 9 dB.

10. Procédé selon la revendication 8, **caractérisé en ce qu'**au moyen du module de transformation de Gauss (31), les débits binaires sont définis pour une marge de transfert de données de 6 dB.

11. Procédé selon l'une des revendications 8 à 10, **caractérisé en ce que** le facteur de correction reproduit une dépendance non linéaire par rapport aux longueurs physiques (13) et épaisseurs d'âmes de câble (141, 142, 143, 144).

12. Procédé selon l'une des revendications 8 à 11, **caractérisé en ce que** le spectre de puissance est mesuré en fonction de la fréquence de transmission pour des types de modem (101, 102, 103, 104) ADSL et/ou SDSL et/ou HDSL et/ou VDSL.

13. Procédé selon la revendication 12, **caractérisé en ce que** les types de modem possibles SDSL (101, 102, 103, 104) comprennent au moins un type de modem G.991.2 et/ou, les types de modem ADSL (101, 102, 103, 104) au moins un type de modem G.992.2.

14. Procédé selon l'une des revendications 8 à 13, **caractérisé en ce qu'**au moyen du module de transformation de Gauss (31), les marges débits binaires sont définies pour au moins les modulations de transfert de données 2B1 Q et/ou CAP et/ou DMT et/ou PAM.

15. Procédé selon l'une des revendications 8 à 14, **caractérisé en ce qu'**au moyen du module de transformation de Gauss (31), les débits binaires sont définis pour au moins le codage de modulation en treillis.

16. Produit de programme informatique qui peut être directement chargé dans la mémoire interne d'un ordinateur numérique et qui comprend des sections de code logiciel avec lesquelles sont exécutées les étapes selon l'une des revendications 8 à 15 , quand le produit tourne sur un ordinateur.

17. Système pour la détermination de marges de transfert de données pour la détermination de marges de transfert de données pour des connexions réseau, la longueur physique (13) d'une connexion réseau à déterminer (12) entre un émetteur (10 et un récepteur (11) étant connue,
le système comprenant un système de mesure (20) d'un spectre de puissance en fonction de la fréquence de transmission pour des types de modem possibles (101, 102, 103, 104) ainsi qu'un support de données d'une unité de calcul (30), sur lequel peut être stocké le spectre de puissance,
l'unité de calcul (30) comprenant des moyens pour la détermination de l'affaiblissement pour les différentes longueurs physiques (13) et des épaisseurs d'âmes de câbles (141, 142, 143, 144) d'une connexion de réseau (12), les intensités de signaux effectives pour le récepteur (11) étant stockées et associées en se basant sur l'affaiblissement et le spectre de puissance aux longueurs physiques (13) et épaisseurs d'âmes de câble (141, 142, 143, 144) respectives dans une première liste sur le support de données de l'unité de calcul (30),
l'unité de calcul (30) comprenant des moyens pour la détermination du niveau de bruit (40) en fonction au moins de paramètres de diaphonie, du nombre de sources parasites en se basant sur le spectre de puissance, le niveau de bruit (40) étant stocké dans une seconde liste et associé aux longueurs physiques (13) et épaisseurs d'âmes de câble (141, 142, 143, 144) respectives de la connexion réseau (12) sur un support de données de l'unité de calcul,
l'unité de calcul (30) comprenant un module de transformation de Gauss (31) pour la détermination de marges de transfert de données pour un débit binaire prédéfini en se basant sur les intensités de signal effectives des premiers et des niveaux de bruit correspondants de la seconde liste pour différentes modulations de transfert de données et/ou de codages de modulation, les marges de transfert de données pour un débit binaire prédéfini, étant associées aux longueurs physiques (13) et épaisseurs d'âmes de câble (141, 142, 143, 144) respectives et stockées sur un support de données de l'unité de calcul (30),
l'unité de calcul (30) comprenant un module de correction qui détermine les marges de transfert de données effectives au moyen d'au moins un facteur de correction en se basant sur les marges de transfert de données stockées et les associant aux longueurs physiques (13) et épaisseurs d'âmes de câble (141, 142, 143, 144) respectives de la connexion réseau (12) et les stockant sur un support de données de l'unité de calcul (30), le facteur de correction comprenant une divergence moyenne des marges de transfert de données stockées par rapport aux marges de transfert de données effectives et/ou un facteur égaliseur pour la correction de syntonisation d'égaliseur.

FIG. 1

EP 1 444 802 B1

**FIG. 2**

**FIG. 3**

EP 1 444 802 B1

70

77

72

78

71

79

76

74

73

75

FIG. 4